(19) **Europäisches Patentamt / European Patent Office / Office européen des brevets**

(11) **EP 2 116 516 B1**

(12) **EUROPEAN PATENT SPECIFICATION**

(45) Date of publication and mention
of the grant of the patent:
**12.03.2014 Bulletin 2014/11**

(51) Int Cl.:
*C02F 1/46* (2006.01)     *D06F 39/00* (2006.01)
*A47J 27/16* (2006.01)     *A21B 3/04* (2006.01)
*A47L 15/42* (2006.01)     *D06F 75/08* (2006.01)

(21) Application number: **08425317.8**

(22) Date of filing: **09.05.2008**

(54) **Machine with water heating means and anti-scale device**

Vorrichtung mit Wasserheizgerät und Gerät zur Verhütung von Kesselstein

Dispositif avec des moyens de chauffage d'eau et des moyens anti-tartre

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**11.11.2009 Bulletin 2009/46**

(73) Proprietor: **ELECTROLUX PROFESSIONAL S.p.A.**
**33170 Pordenone (IT)**

(72) Inventors:
 • **Sinatra, Fabio**
  **33052 Cervignano del Friuli, Udine (IT)**
 • **Toppano, Michele**
  **33036 Mereto di Tomba, Udine (IT)**
 • **Dreossi, Giuseppe**
  **30026 Portogruaro, Venezia (IT)**

 • **Tassan Mangina, Franco**
  **33080 Marsure, Pordenone (IT)**

(74) Representative: **Markovina, Paolo et al**
**Electrolux Italia S.p.A.**
**Corso Lino Zanussi 30**
**33080 Porcia (PN) (IT)**

(56) References cited:
**EP-A- 1 762 546      EP-A- 1 920 655**
**WO-A-03/091161      DE-U1-202007 005 471**
**JP-A- 2004 049 946**

 • **COETZEE P P ET AL: "Scale reduction and scale modification effects induced by Zn and other metal species in physical water treatment" WATER SA, PRETORIA, SA, vol. 24, no. 1, 1 January 1998 (1998-01-01), pages 77-84, XP002466508 ISSN: 0378-4738**

## Description

The present invention refers to a machine, such as a washing machine, in particular a dishwashing or warewashing machine and a clothes washing machine, an ironing machine, a food cooking oven and a boiling pan of the kind intended for use in professional kitchens, such machine being provided with water heating means and being further provided with a device adapted to curb and reduce scale formation.

WO 03/091161 A discloses a prior art.

Machines are largely known nowadays, and commonly used in a variety of industrial and commercial applications, which are provided with a water-carrying circuit, in which water supplied from the main water supply line is circulated, and heating means designed to heat up such water, possibly even to values beyond the boiling temperature thereof. Machines of such kind may for instance include household or commercial washing machines, such as clothes washing or dishwashing machines, ironing appliances, along with food cooking ovens and boiling pans intended for use in professional kitchens.

It is a largely known fact that, in machines of the above-indicated kind, the provision of heating elements submerged in the water being let in from the water supply line in view of heating it up to an appropriate working or process temperature, gives in almost the totality of cases rise to a quite typical problem due to the fact that such elements as calcium bicarbonate dissolved in said water converts into calcium carbonate, generally known also as "limestone", owing to the temperature of the water being heated to high values. Calcium carbonate then deposits on the surface of the heating elements in the form of scale, thereby causing the heat-exchange efficiency, i.e. the heat conductivity of the heating elements to suffer even marked reductions. In addition, such reduced capacity of the heaters of exchanging, i.e. transferring heat to the water that is due to be heated up by them, gives in turn rise to the disadvantageous effect of the same heating elements being exposed to overheating, which implies a real risk for them to eventually incur irreparable damages.

Removing such surface scale may substantially occur in a couple of manners. A first such manner is based on having the heating elements and the water-carrying circuit, through which the water being heated is circulated, periodically submitted to regular, appropriate maintenance aimed at either mechanically or chemically cleaning them in view of physically removing the scale formed thereon. Generally, while removing scale mechanically from a surface calls for the use of appropriate tools, doing it chemically is based on the use of special substances that are capable of chemically combining with calcium carbonate and dissolving it.

Anyway, both processes can be readily appreciated to involve extended periods of machine inoperativeness, along with the use of skilled personnel to carry out the required cleaning operations.

A second manner, in which scale may practically be prevented from forming, is based on having the water cleared of the calcium bicarbonate dissolved therein, i.e. dissolved calcium bicarbonate removed from the water prior to the latter being conveyed into the boiler, i.e. the vessel housing the heating elements provided to heat up said water. Such removal of scale-forming elements from the water can be done with the use of chemical-type water softeners, nanofilters, reverse osmosis cells, or the like.

Now, the use of devices of the above-cited kind, further to introducing added complexity in the construction of the machine as a whole, requires said devices to be anyway submitted to regular maintenance periodically, in view of ensuring that they are kept adequately effective in removing calcium bicarbonate.

Known among the above-cited water softening devices there are also galvanic-cell and electrochemical-cell devices, which substantially consist of an electrode couple submerged in the water to be softened. The electrodes release ions or produce salts that enable or cause scale-forming elements to crystallize and/or coagulate, rather than depositing on the walls of the water-carrying circuit in which the same water is circulated. An example of devices of such kind is illustrated in the British patent application GB 2 384 536. A major drawback of this kind of devices lies in them being totally incapable of enabling the generation of ions or salts to be adapted to the actual amount or, better, flow rate of the water being treated, so that the preventive effect on the formation of scale may turn out as being in fact inadequate at higher flow rates of the water. In addition, a further limitation of the devices of the above-noted kind lies in them becoming rapidly depleted, i.e. running quickly into exhaustion due to at least one of the electrodes getting consumed. Even in this case, therefore, frequent maintenance becomes necessary for consumed electrodes to be duly replaced, which unavoidably results in clear disadvantages being incurred in terms of operativeness and efficiency of the machine, as already mentioned hereinbefore.

Known from the European patent application EP 07118651.4 by this same Applicant is the use of an electrolytic cell that elutes zinc ions in water to reduce scale formation on the surface of the heating elements in a commercial oven adapted to cook by steam, i.e. a so-called steam cooker.

The basic object of the present invention is to provide a machine, i.e. a washing machine, such as in particular a clothes washing machine and a dishwashing machine, an ironing machine, a steam cooker of the directly heated kind and a boiling pan of the kind intended for use in professional kitchens, and the like, which does away with the drawbacks and limitations of prior-art machines that make use of water heating means.

Within this general object, it is a purpose of the present invention to provide a washing machine that enables the amount of water-softening agents that have to be added to the detergents in view of softening the wash or process water to be reduced and/or the use of such agents to be fully eliminated.

It is a further purpose of the present invention to provide a washing machine, a boiling pan for foodservice applications, an ironing machine and a steam-cooking oven, which ensure improved overall reliability and do not require any particular maintenance to be carried out on the water heating means.

Yet a further purpose of the present invention is to provide a machine using or incorporating water heating means, in which the water-softening, i.e. scaling prevention capacity may be adjusted in accordance with the actual flow rate of the water being used by the machine, as well as in accordance with the degree of hardness of the water to be treated.

Another, equally important purpose of the present invention is to provide a machine of the above-cited kind, in which the scale-preventing device and/or any of the component parts thereof can be replaced and/or restored to full operating condition in a most convenient, easy and quick manner.

According to the present invention, these aims, along with further ones that will become apparent from the following disclosure, are reached in a washing machine, a boiling pan for foodservice applications, an ironing machine and a steam-cooking oven incorporating the features and characteristics as defined and recited in the appended claims.

Advantages and features of the present invention will anyway be more readily understood from the description that is given below by way of non-limiting example with reference to the accompanying drawings, in which:

The invention is defined by independent claims 1, 4, 7 and 10.

- Figure 1 is a schematical view of a clothes washing machine of the type intended for commercial applications, as provided with an electrolytic cell according to the present invention;

- Figure 2 is a schematical view of a dishwashing machine provided with an electrolytic cell according to the present invention;

- Figure 3 is a schematical view of a boiling pan of the indirectly heated type for use in professional kitchens, as provided with an electrolytic cell according to the present invention;

- Figure 4 is a schematical view of a boiling pan of the directly heated type for use in professional kitchens, as provided with an electrolytic cell according to the present invention;

- Figure 5 is a schematical view of a steam iron of the type featuring an integrated boiler, as provided with an electrolytic cell according to the present invention;

- Figure 6 is a schematical view of a steam iron of the type featuring a separate boiler, as provided with an electrolytic cell according to the present invention;

- Figure 7 is a schematical view of a steam oven of the type intended for cooking food by direct steam, as provided with an electrolytic cell according to the present invention.

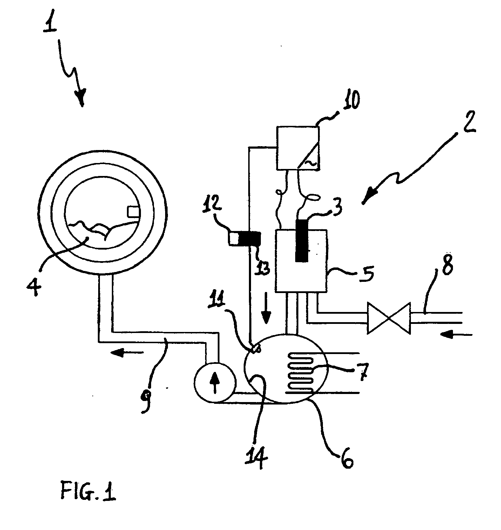

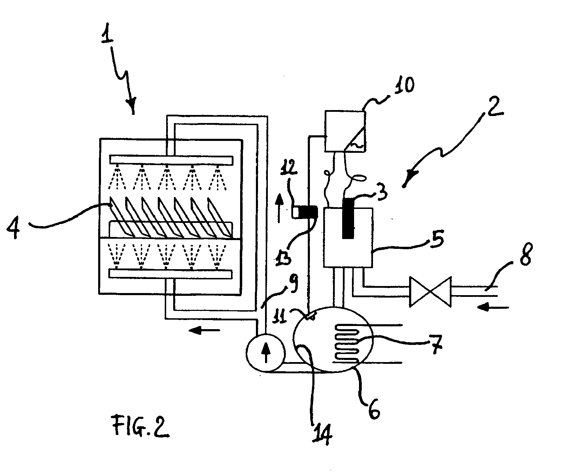

With reference to Figures 1 and 2, these can be noticed to schematically illustrate a washing machine, such as in particular a clothes washing machine for commercial or professional application (Figure 1) and a dishwashing machine (Figure 2), which is provided with a washing chamber 1, in which items 4 as clothes, dishes, or the like, are placed for washing, and a boiler 6 provided with heating means 7 of a kind suitable for heating up water. The boiler 6 is supplied with water delivered from the water supply line via a duct 8 connected thereto. The boiler 6 and the washing chamber 1 are fluidly connected with each other via a second supply duct 9, so that the hot water produced by the boiler 6 is capable of being conveyed into the washing chamber 1. The arrows appearing in Figures 1 and 2 are situated along the water-carrying circuit 8, 9 of the washing machine to indicate the flow-path followed by the water from the water supply line up to the point at which it is let into the washing chamber 1. For reasons of greater representative convenience and simplicity, the part of the water-carrying circuit provided to eventually let the water off the washing chamber has not been illustrated.

The water being let in from the water supply line is caused to flow through an electrolytic cell 2 provided in the duct 8 upstream to the boiler 6. An electrolytic cell 2 fitting the purposes of the present invention comprises a first electrode 3 consisting of a mass of zinc, or zinc alloy, in a compact form, i.e. not subdivided into a plurality of distinct particles, and located within a container in which the water to be treated is collected prior to being sent to the boiler 6. The electrolytic cell 2 further comprises a second electrode 5 in contact with the water to be treated, which is preferably formed by the same walls defining said container. The electrodes 3, 5 are energized electrically by a current generator 10.

The properties of zinc in reducing production of calcium carbonate in water are largely known as such in the art, as this is for instance set forth in the publication ISSN 0378-4738 Water SA Vol. 24 No. 1, January 1998, by PP Coetzee et al., available at following Internet address: http://www.wrc.org.za/archives/watersa%20archive/1998/January/jan98 p77.pdf.

Disclosed in the above-cited publication is the scientific demonstration of the fact that the presence of zinc ions in an adequate percentage is effective in slowing down the nucleation rate of calcium carbonate, while modifying the crystalline structure of the limestone, i.e.

scale, to thereby weaken its bond with the hot surface on which it deposits, so as to ultimately enhance the removability thereof, i.e. the aptitude thereof to being removed. From the research and investigation results published in the above-cited article there can be derived the values of minimum concentration by weight of zinc in relation to, i.e. versus the concentration of calcium, for which a measurable scale-preventing effect is obtained. In particular, the alteration of the crystalline structure of the scale, i.e. the formation of aragonite rather than calcite, under a resulting weakening of the bond between calcium carbonate and the hot surface on which the latter settles, occurs when the ratio of the concentration by weight of zinc [mg/dm$^3$] to the concentration by weight of calcium [mg/dm$^3$] in the water is greater than $0.06*10^{-3}$, i.e. when 0.06 micrograms of zinc [$\mu$gZn] for every milligram of calcium [mgCa], wherein by concentrations by weight of zinc and calcium there shall be understood the concentrations by total weight.

In the washing machine illustrated in Figures 1 and 2, the anode 3 is eluted in the water contained in the vessel acting as the catode 5, i.e. in the cell itself, so that the concentration of zinc ions is capable of reaching a pre-determined effective value. The water flowing through the electrolytic cell, and duly added with zinc ions ($Zn^{2+}$) there, is eventually delivered into the boiler 6, where the zinc ions will then slow down scale formation on the wet walls of both the boiler 6 and the heating means 7 to a significant extent.

The concentration of zinc ions eluted in the water can be derived from the mathematical formulation of Faraday's laws:

$$M_{Zn^{2+}} = \frac{Q * M_{Zn}}{z * F}$$

where:

-    $M_{Zn}^{2+}$ is the mass of zinc eluted in the water;
-    Q is the total charge passed through the water, as calculable by means of the relation:

$$Q = \int_0^T I(t)dt$$

where $T$ is the total elution time;

-    $M_{Zn}$ is the molar mass of zinc (65.38 g/mol);
-    z is the valence number of the zinc ions ($Zn^{2+} \Rightarrow z = 2$);
-    F is the Faraday constant (96485.3 C/mol)

Assuming a constant current $I$, therefore $Q = I*T$.
As a result, the above relation (1) may be rewritten as follows:

$$M_{Zn^{2+}} = \frac{(I * T) * M_{Zn}}{z * F}$$

from which there can be derived the value of the current $I$ to be set upon, i.e. applied to the electrolytic cell for a specified mass of zinc $M_{Zn}^{2+}$ to be able to be eluted in the water during a total time T of known length. The value of the mass of zinc $M_{Zn}^{2+}$ may be selected on the basis of the disclosure in the afore-cited scientific article by PP Coetzee et al.

When the mathematical relations set forth above are considered, it can be most readily appreciated that controlling the current applied to the electrolytic cell 2 illustrated in Figures 1 and 2 will enable a concentration by weight of zinc [$\mu$g/dm$^3$] in the water flowing in from the water supply line, which is each time best suited to the actual flow rate and/or degree of hardness of the water to be treated, thereby ensuring that such water will not give rise to scale formation on the inner surfaces of the boiler 6 and the heating means 7 provided thereinside.

To the purpose of adjusting the concentration of zinc eluted in the water, the washing machine shown in Figures 1 and 2 is provided with sensor means 11 and processing means 12 adapted to determine the (Zn)-to-(Ca) ratio, i.e. the ratio of the concentration by weight of zinc to the concentration by weight of calcium in the water downstream from the electrolytic cell 2 and, in particular, inside the boiler 6. Control means 13 are provided in a signal-exchanging communication arrangement with the processing means 12 and the current generator 10 in view of controlling, i.e. adjusting the current being supplied to the electrolytic cell according to the detected value of the (Zn)-to-(Ca) ratio, wherein said ratio will preferably be held at a value greater than $0.06*10^{-3}$ by said control means 13.

Such control, or adjustment, of the intensity of the current supplied by the current generator 10 to the electrolytic cell 2 may of course be done either on a continuous-duty basis, i.e. in such manner as to ensure that the electrolytic cell 2 will produce zinc ions ($Zn^{2+}$) to an amount that is substantially proportional to the amount of water flowing through the same cell so that the concentration of zinc in the water is held nearly constant, or in a non-continuous manner. The need for such control to be done on a non-continuous basis can for instance become true, i.e. show up during the initial phases of the boiler filling process, when it may in fact be appropriate for the electrolytic cell to be supplied with a current of greater intensity for a certain period of time initially, to then reduce such intensity, and hold it at such reduced value, so as to let the boiler go on operating under regular, steady-state conditions.

In view of enhancing the scale-preventing action ensured by the electrolytic cell 2, there may be also contemplated that the inner surfaces 14 of the boiler 6 be coated with a particular polymeric material. This is made possible by the fact that such surfaces are exposed to temperatures that do not exceed 100°C, or do it by just a few degrees centigrade at most, thereby keeping well below the melting point of the polymeric material used for coating. Such material is preferably the one that is generally known under the trade-name "RILSAN", produced by the company ARKENSOL, although such polyamide-based plastics commonly referred to by their abbreviations PA6, PA11, PA12, PA46, PA66 may equally be used to such purpose, owing to these polymeric materials being barely sensitive to, i.e. hardly affected by limestone depositing thereon. Through such additional provision, the amount of limestone depositing and scale forming inside the boiler 6 is further reduced to quite considerable an extent.

Although a clothes washing machine of a commercial, i.e. heavy-duty kind is illustrated in Figure 1, the present invention may be readily applied also to household-type clothes washing machines, in which the boiler 6 and the heating means 7 are largely known to be incorporated in the wash tub, or outer drum, of the machine, while the afore-cited duct 9 is in this case missing. In this case, the sensor means 11 would be located inside the wash tub and the walls of such tub that are in contact with the washing water might in turn be coated with any of the above-cited polymeric materials.

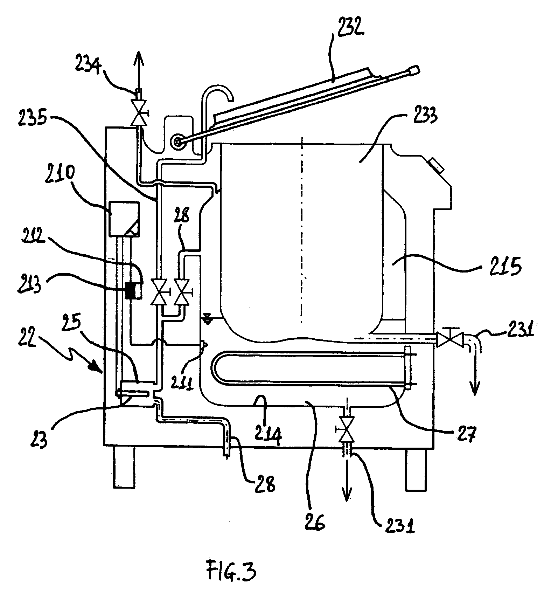

The operating principle of the electrolytic cell as a system aimed at reducing scale formation on the inner surfaces of the boiler 6 and the heating means 7 thereof, as well as the ways and modes used to control the intensity of the current supplied to the electrolytic cell 2, can be applied to a multiplicity of machines, in which there is provided a boiler for heating up water or generating steam. Therefore, with reference to the exemplary embodiments shown in Figures 3 through to 7, the same considerations and explanations will apply as the ones set forth above in connection with Figures 1 and 2 as far as the electrolytic cell and the scale-preventing action exerted by such cell are concerned.

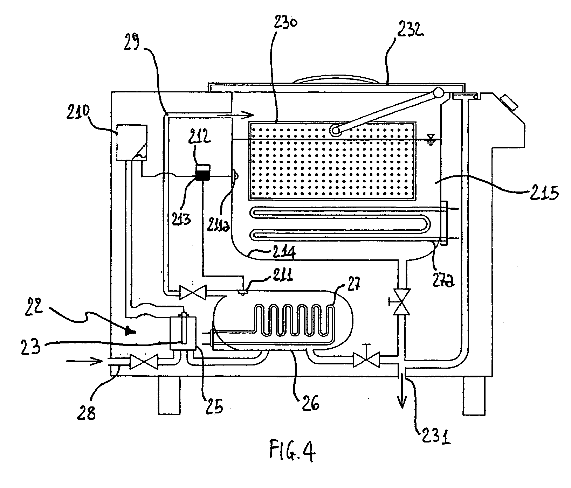

Illustrated in Figures 3 and 4 is a boiling pan of the kind intended for use in professional kitchens. In particular, shown in Figure 3 is such boiling pan of an indirectly heated type, i.e. a boiling pan in which the food to be cooked does not come into any contact with the water, since it is contained in a compartment that is separated from the circuit carrying the process water. Shown in Figure 4 is on the other hand a boiling pan of the directly heated type, in which the process water comes in contact with the food to be cooked. An example of direct-heating boiling pan for professional foodservice applications to which the present invention can be applied is the so-called pasta-cooker.

Both types of boiling pans comprise a first water inlet duct 28 fluidly connecting the boiling pan to the water supply line, and a boiler 26 provided with heating means 27 to heat up the water being let thereinto. A collecting vessel 215 is provided to accept and hold the cooking water heated up by the heating means 27 in the boiler 26. An electrolytic cell 22 is located in the water inlet duct 28 at a site upstream to the boiler 26, so that the water being taken in from the water supply line will flow through the electrolytic cell 22 and be correspondingly enriched by the addition of zinc ions ($Zn^{2+}$) eluted by a zinc electrode 23 located within a container in which the water to be treated is collected prior to being delivered into the boiler 26. The electrolytic cell 22 further comprises a second electrode 25 in contact with the water to be treated and preferably formed by the same walls defining said container.

The electrolytic cell 22 is energized, i.e. supplied electrically by a current generator 210, which is in a signal-exchanging communication arrangement with control means 213 that are adapted to control and adjust the intensity of the current supplied to the electrolytic cell 22. These control means 213 receive signals that are indicative of the existing (Zn)-to-(Ca) ratio, i.e. the ratio of the concentration by weight of zinc to the concentration by weight of calcium measured in the water downstream from the electrolytic cell 22 and, in particular, inside the boiler 26 by processing means 212. These processing means determine the above-mentioned (Zn)-to-(Ca) ratio on the basis of what is detected by sensor means 211 arranged within the boiler 26. The (Zn)-to-(Ca) ratio is preferably held at a value greater than $0.06*10^{-3}$ by said control means 213.

In the case of a heavy-duty, i.e. professional boiling pan of the direct-heating type (Figure 4), further heating means 27a may be provided inside the collecting vessel 215 to the purpose of holding the water collecting thereinside at the temperature to which it has been heated up in the boiler 26, and at which it has been delivered by the boiler 26; for this reason, in view of ensuring that limestone will not give rise to scale formation on the heating means 27a, further sensor means 211 a are located inside the collecting vessel 215 in contact with the cooking water. In this case, the processing means will of course determine a pair of values for the (Zn)-to-(Ca) ratios detected in the two corresponding water containing regions being monitored by the sensor means 211 and 211 a, respectively. The control means 213 that receive the signals being delivered by said processing means 212 will control the current generator in such manner as to ensure that the current supplied to the electrolytic cell 22 is enabled to elute zinc ions ($Zn^{2+}$) to a sufficient amount to cater for both the volume of water contained in the boiler 26 and the volume of water contained in the collecting vessel 215.

As this has already been described hereinbefore with reference to Figures 1 and 2, the inner surfaces 214 of the boiler 26 may be provided with a suitable coating of a polyamide-based polymeric material, such as PA6, PA11, PA12, PA46, PA66, as they are generally known in the art, owing to these polymeric materials being barely sensitive to, i.e. hardly affected by limestone depositing thereon.

As far as the structure of the professional boiling pans illustrated in Figures 3 and 4 is concerned, the boiling pan of the directly heated type (Figure 4) comprises a second duct 29 provided to convey the water heated up by the boiler 26 into the collecting vessel 215. A perforated container 230 adapted to accommodate the food to be cooked is mounted in a horizontally pivoted, i.e balancing, arrangement relative to the collecting vessel 215 in such manner as to be able to be let down and be received thereinside. There are further provided drain ducts 231 for letting the water off the boiler 26 and the collecting vessel 215, as well as ensuring a safety overflow provision to let out excess water from the vessel 215. A lid 232 is used to close the collecting vessel 215.

The professional boiling pan of the indirectly heated type shown in Figure 3 is provided with a lid 232 that closes a holding vessel 233, in which the food is placed for cooking. This holding vessel 233 does not receive the water heated in the boiler 26 in its interior, but is rather formed within the collecting vessel 215 so that a jacket, or hollow space, is created between the holding vessel 233 and the collecting vessel 215 for the hot water flowing in from the boiler 26 to be able to fill it up. The collecting vessel 215 and the food holding vessel 233 are provided with drain ducts 231 for letting off both the water and cooking liquids. The collecting vessel 215 is furthermore provided with a vent conduit 234 to vent out vapours forming thereinside.

The water inlet duct 28 connected to the water supply line includes a branch pipe 235 provided to convey in-flowing water from the water supply line into the food holding vessel 233.

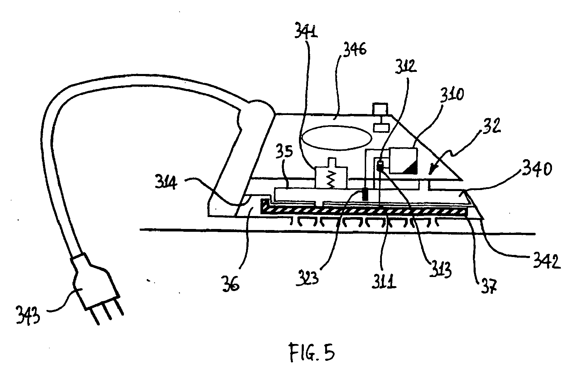

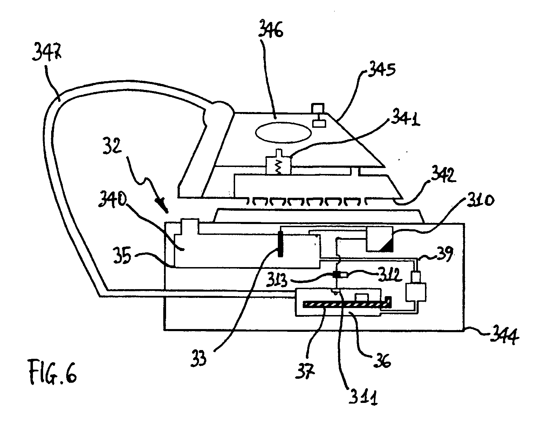

Illustrated in Figures 5 and 6 are two steam irons of the integrated-boiler and the separate-boiler types, respectively. Both types of steam irons comprise a reservoir 340 adapted to receive and hold water being filled in from the water supply line. Via a duct 39, this reservoir 340 is fluidly connected to a boiler 36 provided with water heating means 37 adapted to heat up the water flowing in from said reservoir. An electrolytic cell 32 is provided to reduce scale formation inside the boiler 36 through the elution of zinc ions ($Zn^{2+}$). To this purpose, the electrolytic cell 32 comprises a first zinc electrode 33 and a second electrode 35 in contact with said water and preferably formed by the walls of the same reservoir 340. The electrolytic cell 32 is energized, i.e. supplied electrically by a current generator 310, which is in a signal-exchanging communication arrangement with control means 313 that are adapted to control and adjust the intensity of the current being supplied to the electrolytic cell 32. These control means 313 receive signals that are indicative of the existing (Zn)-to-(Ca) ratio, i.e. the ratio of the concentration by weight of zinc to the concentration by weight of calcium measured in the water downstream from the electrolytic cell 32 and, in particular, inside the boiler 36 by processing means 312. These processing means determine the above-mentioned (Zn)-to-(Ca) ratio on the basis of what is detected by sensor means 311 arranged within the boiler 36. The (Zn)-to-(Ca) ratio is preferably held at a value above $0.06*10^{-3}$ by said control means 213.

As this has already been described hereinbefore with reference to Figures 1 to 4, the inner surfaces 314 of the boiler 36 may be provided with a suitable coating of a polyamide-based polymeric material, such as PA6, PA11, PA12, PA46, PA66, as they are generally known in the art, owing to these polymeric materials being barely sensitive to, i.e. hardly affected by limestone depositing thereon.

In the steam iron embodied as illustrated in Figure 5, the boiler 36 is provided on the smoothing plate 342 of the same iron, which is capable of being grasped and held by means of a handle 346. A selector switch 341 is provided to set and adjust the temperature of the smoothing plate 342, and a plug 343 is provided for connection of the iron to the power supply.

In the steam iron embodied as illustrated in Figure 6, the water reservoir 340, the boiler 36 and the electrolytic cell 32 are housed in a first unit 344, whereas a second unit 345, which is fluidly connected to the first unit 344, comprises a handle 346 and a smoothing plate 342. Inside the first unit 344, the water, as enriched through the addition of zinc ions ($Zn^{2+}$), is conveyed into the boiler 36, where it is converted into steam. Such steam is in turn delivered to the second unit 345 via a duct 347, and made available there for release onto and through the smoothing plate 342. A selector switch 341 is provided for setting the particular ironing programme selected for the steam iron to carry out.

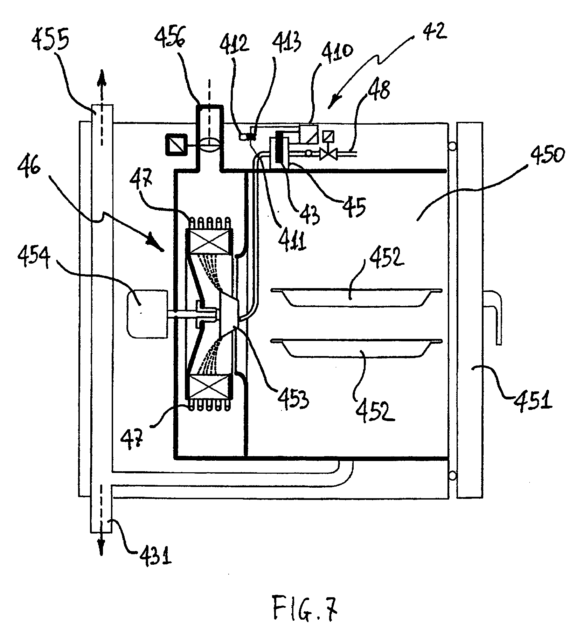

Illustrated in Figure 7 is a steam cooker, i.e. an oven of the direct-heating type intended for cooking food by steam. The oven is provided with a cooking cavity 450, inside which there are removably associated one or more trays or pans 452 provided for the food to be cooked to be placed thereupon. The oven is connected to the water supply line via a water inlet duct 48, which supplies water to a diffuser 453 that is rotatably mounted relative to the cooking cavity 450. An electric motor 454 drives said diffuser 453 rotatably, so that the water is spread about by centrifugal effect towards heating means 47 arranged around the diffuser 453. The water hitting the heating means 47 is in the form of tiny droplets that vaporize instantly. The heating means 47 and the water diffuser 453 form substantially a boiler 46.

An electrolytic cell 42 is located in the water inlet duct 48 at a site upstream to the boiler 46, so that the water being taken in from the water supply line will flow through the electrolytic cell 42 and be correspondingly enriched by the addition of zinc ions ($Zn^{2+}$) eluted by a zinc electrode 43 located within a container in which the water to be treated is collected prior to being delivered into the boiler 46. The electrolytic cell 42 further comprises a second electrode 25 in contact with the water to be treated and preferably formed by the same walls defining said container.

The electrolytic cell 42 is energized, i.e. supplied electrically by a current generator 410, which is in a signal-exchanging communication arrangement with control means 413 that are adapted to control and adjust the intensity of the current supplied to the electrolytic cell 42. These control means 413 receive signals that are indicative of the existing (Zn)-to-(Ca) ratio, i.e. the ratio of the concentration by weight of zinc to the concentration by weight of calcium measured in the water downstream from the electrolytic cell 42 by processing means 212. These processing means determine the above-mentioned (Zn)-to-(Ca) ratio on the basis of what is detected by sensor means 411 provided downstream from the electrolytic cell 42. The (Zn)-to-(Ca) ratio is preferably held at a value greater than $0.06*10^{-3}$ by said control means 413.

The oven is further provided with a drain conduit 431 for letting cooking liquids and remainders off the cooking cavity 450, as well as conduits 455 and 456 to vent off cooking fumes and vapours and adjust humidity in the cooking cavity, respectively. It shall be anyway noticed that the present invention can most obviously be applied to any type or kind of food cooking oven that is provided with heating means 47 and spray means 453 adapted to project the water supplied by the duct 48 onto the heating means 47 to cause it to vaporize.

Fully apparent from the above description is therefore the ability of the present invention to effectively reach the aims and advantages cited afore by in fact providing a machine equipped with water heating means of improved reliability, in which the scale-preventing effect can be appropriately adjusted based on the actual flow rate or amount of water being used by the machine, as well as based on the degree of hardness of the water to be treated. A machine made in accordance with the present invention enables the average operating life thereof to be markedly extended in time, while at the same time ensuring unaltered performance levels.

Particularly advantageous is further the possibility given for the electrolytic cell to be located at such sites in the machine as to allow the related zinc electrode to be readily accessible and conveniently removable in view for replacement.

It shall be appreciated that the materials used in connection with the present invention, as well as the shape and the sizing of the various parts involved, may each time be selected so as to more appropriately meet the particular requirements or suit the particular application.

It shall further be appreciated that the various elements forming the object of and being part of the present invention shall certainly not be solely embodied in the manners that has been described and illustrated hereinbefore, but can rather be implemented in many other embodiments - although not specifically illustrated here - without departing from the scope of the present invention.

**Claims**

1. Washing machine comprising:

   - a boiler (6) provided with heating means (7) adapted to heat up water,
   - at least a first water inlet duct (8) fluidly connecting said boiler (6) to a water supply line,
   - a washing chamber (1) fluidly connected to said boiler (6),

   **characterized in that** said first water inlet duct (8) is provided with an electrolytic cell (2) adapted to be passed therethrough by said water, said cell being further adapted to produce zinc ions ($Zn^{2+}$) that are eluted and dispersed in said water, **and in that** said washing machine further comprises sensor means (11) and processing means (12) to determine the ratio (Zn)/(Ca) of the concentration by weight of zinc to the concentration by weight of calcium in said water, and control means (13) in signal communication with a current generator (10) which energizes said electrolytic cell (2) for controlling the operation thereof according to a detected value of said (Zn)/(Ca) ratio.

2. Washing machine according to claim 1, wherein said (Zn)/(Ca) ratio is held at a value greater than $0.06*10^{-3}$ by said control means (13).

3. Washing machine according to claim 1 or 2, **characterized in that** it is a clothes washing machine or a dishwashing machine.

4. Boiling pan of the type intended for use in professional kitchens, comprising:

   - a boiler (26) provided with heating means (27) adapted to heat up water,
   - at least a first water inlet duct (28) fluidly connecting said boiler (26) to a water supply line,
   - a collecting vessel (215) for receiving said water,

   **characterized in that** said first water inlet duct (28) is provided with an electrolytic cell (22) adapted to be passed therethrough by said water, said cell being further adapted to produce zinc ions ($Zn^{2+}$) that are eluted and dispersed in said water, **and in that** said boiling pan comprises sensor means (211, 211 a) and processing means (212) adapted to determine the ratio (Zn)/(Ca) of the concentration by weight of zinc to the concentration by weight of calcium in said water, and control means (213) in signal communication with a current generator (210) which energizes said electrolytic cell (2) for controlling the operation thereof according to a detected value of said (Zn)/(Ca) ratio.

**5.** Boiling pan according to claim 4, wherein said (Zn)/(Ca) ratio is held at a value greater than $0.06*10^{-3}$ by said control means (213).

**6.** Boiling pan according to claim 4 or 5, wherein said collecting vessel (215) defines a compartment adapted to receive a balancing container (230) for containing food to be cooked.

**7.** Steam iron comprising:

- a boiler (36) provided with heating means (37) adapted to heat up water,
- a reservoir (340) adapted to contain said water and fluidly connected to said boiler (36),

**characterized by** comprising an electrolytic cell (32) adapted to be passed therethrough by said water, said cell being further adapted to produce zinc ions ($Zn^{2+}$) that are eluted and dispersed in said water, **and in that** said steam iron comprises sensor means (311) and processing means (312) adapted to determine the ratio (Zn)/(Ca) of the concentration by weight of zinc to the concentration by weight of calcium in said water, and control means (313) provided in signal communication with a current generator (310) which energizes said electrolytic cell (32) for controlling the operation thereof according to a detected value of said (Zn)/(Ca) ratio.

**8.** Steam iron according to claim 7, wherein said (Zn)/(Ca) ratio is held at a value greater than $0.06*10^{-3}$ by said control means (313).

**9.** Steam iron according to claim 7 or 8, comprising a first unit (344) accommodating the boiler (36), the reservoir (340) and the electrolytic cell (32), and a second unit (345) that is fluidly connected with said first unit (344) and comprises a handle (346) and a smoothing plate (342).

**10.** Food cooking oven comprising:

- a cooking cavity (450),
- heating means (47) adapted to heat up the cooking cavity (450),
- water projecting means (453) fluidly connected to a water supply line via a first water inlet duct (48), said water projecting means (453) comprising a water diffuser adapted to project water droplets onto the heating means (47),

**characterized in that** said first water inlet duct (48) is provided with an electrolytic cell (42) adapted to be passed therethrough by said water, said cell being further adapted to produce zinc ions ($Zn^{2+}$) that are eluted and dispersed in said water, **and in that** said food cooking oven comprises sensor means (411) and processing means (412) adapted to determine the ratio (Zn)/(Ca) of the concentration by weight of zinc to the concentration by weight of calcium in said water, and control means (413) provided in signal communication with a current generator (410) which energizes said electrolytic cell (42) for controlling the operation thereof according to a detected value of said (Zn)/(Ca) ratio.

**11.** Food cooking oven according to claim 10, wherein said (Zn)/(Ca) ratio is held at a value greater than $0.06*10^{-3}$ by said control means (413).

**Patentansprüche**

**1.** Waschmaschine, die umfasst:

- einen Boiler (6), der mit einem Heizmittel (7) versehen ist, das zum Erhitzen von Wasser ausgelegt ist,
- zumindest einen ersten Wassereinlasskanal (8), der den Boiler (6) mit einer Wasserversorgungsleitung in Fluidverbindung bringt,
- eine Waschkammer (1), die mit dem Boiler (6) in Fluidverbindung steht,

**dadurch gekennzeichnet, dass** der erste Wassereinlasskanal (8) mit einer elektrolytischen Zelle (2) versehen ist, die so ausgelegt ist, dass Wasser durch diese fließt, wobei die Zelle darüber hinaus so ausgelegt ist, dass sie Zinkionen ($Zn^{2+}$) produziert, die im Wasser eluiert und dispergiert sind, **und dass** die Waschmaschine darüber hinaus ein Sensormittel (11) und ein Verarbeitungsmittel (12), um das Verhältnis (Zn)/(Ca) der Konzentration von Zink nach Gewicht zur Konzentration von Calcium nach Gewicht in dem Wasser zu ermitteln, und ein Steuermittel (13) in Signalverbindung mit einem Stromgenerator (10) umfasst, der die elektrolytische Zelle (2) mit Energie versorgt, um deren Betrieb gemäß einem erkannten Wert des (Zn)/(Ca)-Verhältnisses zu steuern.

**2.** Waschmaschine nach Anspruch 1, wobei das (Zn)/(Ca)-Verhältnis vom Steuermittel (13) auf einem Wert von mehr als $0,06 * 10^{-3}$ gehalten wird.

**3.** Waschmaschine nach Anspruch 1 oder 2, **dadurch gekennzeichnet, dass** sie eine Waschmaschine für Kleidung oder ein Geschirrspüler ist.

**4.** Kochkessel des Typs, der zur Verwendung in professionellen Küchen vorgesehen ist, der umfasst:

- einen Boiler (26), der mit einem Heizmittel (27) versehen ist, das zum Erhitzen von Wasser ausgelegt ist,

- zumindest einen ersten Wassereinlasskanal (28), der den Boiler (26) mit einer Wasserversorgungsleitung in Fluidverbindung bringt,
- ein Sammelgefäß (215) zur Aufnahme des Wassers,

**dadurch gekennzeichnet, dass** der erste Wassereinlasskanal (28) mit einer elektrolytischen Zelle (22) versehen ist, die so ausgelegt ist, dass Wasser durch diese fließt, wobei die Zelle darüber hinaus so ausgelegt ist, dass sie Zinkionen ($Zn^{2+}$) produziert, die im Wasser eluiert und dispergiert sind, **und dass** der Kochkessel darüber hinaus ein Sensormittel (211, 211a) und ein Verarbeitungsmittel (212), das so ausgelegt ist, dass es das Verhältnis (Zn)/(Ca) der Konzentration von Zink nach Gewicht zur Konzentration von Calcium nach Gewicht in dem Wasser zu ermittelt, und ein Steuermittel (213) in Signalverbindung mit einem Stromgenerator (210) umfasst, der die elektrolytische Zelle (2) mit Energie versorgt, um deren Betrieb gemäß einem erkannten Wert des (Zn)/(Ca)-Verhältnisses zu steuern.

5. Kochkessel nach Anspruch 4, wobei das (Zn)/(Ca)-Verhältnis vom Steuermittel (213) auf einem Wert von mehr als 0,06 * $10^{-3}$ gehalten wird.

6. Kochkessel nach Anspruch 4 oder 5, wobei das Sammelgefäß (215) ein Fach definiert, das so ausgelegt ist, dass es einen Ausgleichbehälter (230) aufnimmt, um zu kochende Lebensmittel zu enthalten.

7. Bügeleisen, das umfasst:

- einen Boiler (36), der mit einem Heizmittel (37) versehen ist, das zum Erhitzen von Wasser ausgelegt ist,
- ein Reservoir (340), das so ausgelegt ist, dass es das Wasser enthält und mit dem Boiler (36) in Fluidverbindung steht,

**dadurch gekennzeichnet, dass** sie eine elektrolytische Zelle (32) umfasst, die so ausgelegt ist, dass Wasser durch diese fließt, wobei die Zelle darüber hinaus so ausgelegt ist, dass sie Zinkionen ($Zn^{2+}$) produziert, die im Wasser eluiert und dispergiert sind, **und dass** das Bügeleisen darüber hinaus ein Sensormittel (311) und ein Verarbeitungsmittel (312), das so ausgelegt ist, dass es das Verhältnis (Zn)/(Ca) der Konzentration von Zink nach Gewicht zur Konzentration von Calcium nach Gewicht in dem Wasser zu ermittelt, und ein Steuermittel (313) in Signalverbindung mit einem Stromgenerator (310) umfasst, der die elektrolytische Zelle (32) mit Energie versorgt, um deren Betrieb gemäß einem erkannten Wert des (Zn)/(Ca)-Verhältnisses zu steuern.

8. Bügeleisen nach Anspruch 7, wobei das (Zn)/(Ca)-Verhältnis vom Steuermittel (313) auf einem Wert von mehr als 0,06 * $10^{-3}$ gehalten wird.

9. Bügeleisen nach Anspruch 7 oder 8, das eine erste Einheit (344), die den Boiler (36), das Reservoir (340) und die elektrolytische Zelle (32) aufnimmt, und eine zweite Einheit (345) umfasst, die mit der ersten Einheit (344) in Fluidverbindung steht und einen Handgriff (346) und eine Glättungsplatte (342) umfasst.

10. Lebensmittelbackofen, der umfasst:

- einen Backhohlraum (450),
- ein Heizmittel (47), das so ausgelegt ist, dass es den Backhohlraum (450) erhitzt,
- ein Wasserprojektionsmittel (453), das über einen ersten Wassereinlasskanal (48) mit einer Wasserversorgungsleitung in Fluidverbindung steht, wobei das Wasserprojektionsmittel (453) einen Wasserdiffusor umfasst, der so ausgelegt ist, dass er Wassertropfen auf das Heizmittel (47) projiziert,

**dadurch gekennzeichnet, dass** der erste Wassereinlasskanal (48) mit einer elektrolytischen Zelle (42) versehen ist, die so ausgelegt ist, dass Wasser durch diese fließt, wobei die Zelle darüber hinaus so ausgelegt ist, dass sie Zinkionen ($Zn^{2+}$) produziert, die im Wasser eluiert und dispergiert sind, **und dass** der Lebensmittelbackofen ein Sensormittel (411) und ein Verarbeitungsmittel (412), das so ausgelegt ist, dass es das Verhältnis (Zn)/(Ca) der Konzentration von Zink nach Gewicht zur Konzentration von Calcium nach Gewicht in dem Wasser zu ermittelt, und ein Steuermittel (413) in Signalverbindung mit einem Stromgenerator (410) umfasst, der die elektrolytische Zelle (42) mit Energie versorgt, um deren Betrieb gemäß einem erkannten Wert des (Zn)/(Ca)-Verhältnisses zu steuern.

11. Lebensmittelbackofen nach Anspruch 10, wobei das (Zn)/(Ca)-Verhältnis vom Steuermittel (413) auf einem Wert von mehr als 0,06 * $10^{-3}$ gehalten wird.

**Revendications**

1. Machine à laver comprenant :

- un chauffe-eau (6) comportant un moyen de chauffage (7) conçu pour chauffer de l'eau ;
- au moins une première conduite d'entrée d'eau (8) reliant de manière fluidique ledit chauffe-eau (6) à une ligne d'alimentation en eau ;
- une chambre de lavage (1) reliée de manière fluidique audit chauffe-eau (6),

**caractérisée par le fait que** ladite première conduite d'entrée d'eau (8) comporte une cellule électrolytique (2) conçue pour être traversée par ladite eau, ladite cellule étant en outre conçue pour produire des ions zinc ($Zn^{2+}$) qui sont élués et dispersés dans ladite eau, et **par le fait que** ladite machine à laver comprend en outre un moyen de capteur (11) et un moyen de traitement (12) pour déterminer le rapport (Zn)/(Ca) de la concentration en poids du zinc à la concentration en poids du calcium dans ladite eau, et un moyen de commande (13) en communication de signal avec un générateur de courant (10) qui excite ladite cellule électrolytique (2) pour commander le fonctionnement de celle-ci selon une valeur détectée dudit rapport (Zn)/(Ca).

2. Machine à laver selon la revendication 1, dans laquelle ledit rapport (Zn)/(Ca) est maintenu à une valeur supérieure à 0,06*$10^{-3}$ par ledit moyen de commande (13).

3. Machine à laver selon la revendication 1 ou 2, **caractérisée par le fait qu'**elle est un lave-linge ou un lave-vaisselle.

4. Bouilloire du type destiné à une utilisation dans des cuisines professionnelles, comprenant :

   - un chauffe-eau (26) comportant un moyen de chauffage (27) conçu pour chauffer de l'eau ;
   - au moins une première conduite d'entrée d'eau (28) reliant de manière fluidique ledit chauffe-eau (26) à une ligne d'alimentation en eau ;
   - une cuve de collecte (215) pour recevoir ladite eau,

   **caractérisée par le fait que** ladite première conduite d'entrée d'eau (28) comporte une cellule électrolytique (22) conçue pour être traversée par ladite eau, ladite cellule étant en outre conçue pour produire des ions zinc ($Zn^{2+}$) qui sont élués et dispersés dans ladite eau, et **par le fait que** ladite bouilloire comprend en outre un moyen de capteur (211, 211a) et un moyen de traitement (212) conçus pour déterminer le rapport (Zn)/(Ca) de la concentration en poids du zinc à la concentration en poids du calcium dans ladite eau, et un moyen de commande (213) en communication de signal avec un générateur de courant (210) qui excite ladite cellule électrolytique (2) pour commander le fonctionnement de celle-ci selon une valeur détectée dudit rapport (Zn)/(Ca).

5. Bouilloire selon la revendication 4, dans laquelle ledit rapport (Zn)/(Ca) est maintenu à une valeur supérieure à 0,06*$10^{-3}$ par ledit moyen de commande (213).

6. Bouilloire selon la revendication 4 ou 5, dans laquelle ladite cuve de collecte (215) définit un compartiment conçu pour recevoir un récipient d'équilibrage (230) destiné à contenir des aliments à cuire.

7. Fer à repasser comprenant :

   - un chauffe-eau (36) comportant un moyen de chauffage (37) conçu pour chauffer de l'eau ;
   - un réservoir (340) conçu pour contenir ladite eau et relié de manière fluidique audit chauffe-eau (36),

   **caractérisé par le fait qu'**il comprend une cellule électrolytique (32) conçue pour être traversée par ladite eau, ladite cellule étant en outre conçue pour produire des ions zinc ($Zn^{2+}$) qui sont élués et dispersés dans ladite eau, et **par le fait que** ledit fer à repasser comprend un moyen de capteur (311) et un moyen de traitement (312) conçus pour déterminer le rapport (Zn)/(Ca) de la concentration en poids du zinc à la concentration en poids du calcium dans ladite eau, et un moyen de commande (313) disposé en communication de signal avec un générateur de courant (310) qui excite ladite cellule électrolytique (32) pour commander le fonctionnement de celle-ci selon une valeur détectée dudit rapport (Zn)/(Ca).

8. Fer à repasser selon la revendication 7, dans lequel ledit rapport (Zn)/(Ca) est maintenu à une valeur supérieure à 0,06*$10^{-3}$ par ledit moyen de commande (313).

9. Fer à repasser selon la revendication 7 ou 8, comprenant une première unité (344) recevant le chauffe-eau (36), le réservoir (340) et la cellule électrolytique (32), et une seconde unité (345) qui est reliée de manière fluidique à ladite première unité (344) et comprend une poignée (346) et une plaque de lissage (342).

10. Four de cuisson d'aliments comprenant :

   - une cavité de cuisson (450) ;
   - un moyen de chauffage (47) conçu pour réchauffer la cavité de cuisson (450) ;
   - un moyen de projection d'eau (453) relié de manière fluidique à une ligne d'alimentation en eau par l'intermédiaire d'une première conduite d'entrée d'eau (48), ledit moyen de projection d'eau (453) comprenant un diffuseur d'eau conçu pour projeter des gouttelettes d'eau sur les moyens de chauffage (47),

   **caractérisé par le fait que** ladite première conduite d'entrée d'eau (48) comporte une cellule électrolytique (42) conçue pour être traversée par ladite eau, ladite cellule étant en outre conçue pour produire des ions zinc ($Zn^{2+}$) qui sont élués et dispersés dans ladite eau, et **par le fait que** ledit four de cuisson d'aliments comprend un moyen de capteur (411) et un moyen de traitement (412) conçus pour déterminer le rapport (Zn)/(Ca) de la concentration en poids du zinc à la concentration en poids du calcium dans ladite eau, et un moyen de commande (413) disposé en communication de signal avec un générateur de courant (410) qui excite ladite cellule électrolytique (42) pour commander le fonctionnement de celle-ci selon une valeur détectée dudit rapport (Zn)/(Ca).

11. Four de cuisson d'aliments selon la revendication 10, dans lequel ledit rapport (Zn)/(Ca) est maintenu à une valeur supérieure à $0,06*10^{-3}$ par ledit moyen de commande (413).

FIG.1

FIG.2

FIG.3

FIG.4

FIG.5

FIG.6

FIG.7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 03091161 A
- GB 2384536 A
- EP 07118651 A

### Non-patent literature cited in the description

- **PP COETZEE et al.** *Water SA,* January 1998, (1), ISSN 0378-4738, http://www.wrc.org.za/archives/watersa%20archive/1998/January/jan98 p77.pdf.